# EUROPÄISCHE PATENTSCHRIFT

(11) **EP 1 864 736 B1**
(45) Veröffentlichungstag und Bekanntmachung des Hinweises auf die Patenterteilung: **04.03.2015**
(21) Anmeldenummer: 07010422.9
(22) Anmeldetag: 25.05.2007
(51) Int. Cl.: B23C 5/02, B23G 5/18

(54) **Gewindeerzeugungswerkzeug mit Kantenübergang**
Thread tapping tool with edge transition
Outil de production de filetage doté d'une jonction de bordure

(30) Priorität: 09.06.2006 DE 102006027232
(43) Veröffentlichungstag der Anmeldung: 12.12.2007
(73) Patentinhaber: EMUGE-Werk Richard Glimpel GmbH & Co.KG Fabrik für Präzisionswerkzeuge, 91207 Lauf (DE)
(72) Erfinder: Glimpel, Helmut, Dipl.-Ing., 91207 Lauf a. d. Pegnitz (DE)
(74) Vertreter: Schröer, Gernot H.

(56) Entgegenhaltungen:
- JP-A- 2002 370 107
- US-A- 6 105 467
- US-A1- 2006 045 638

## Beschreibung

Die Erfindung betrifft einen Gewindebohrer gemäß dem Oberbegriff des Anspruchs 1. Ein solcher Gewindebohrer ist aus EP 1500454 A1 bekannt.

Bei derartigen Gewindebohrer sind am Werkzeugumfang Schneidzähne mit einem in einer vorgesehenen Drehrichtung vorlaufenden und einem nachlaufenden Ende angeordnet. Das vorlaufende Ende jedes Schneidzahnes bildet zwischen einer Spanfläche mit einem Spanwinkel y und einer Freifläche mit einem Freiwinkel α einen Keil mit einer Keilkante und einem Keilwinkel β. Die Keilkante bildet eine Umfangsschneide (auch: Umfangsschneidkante) des Gewindebohrer.

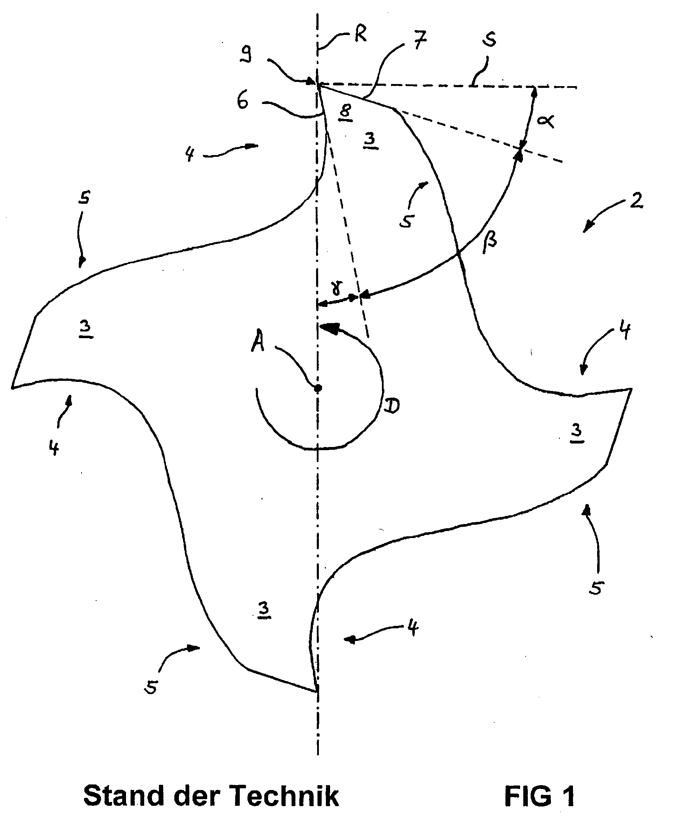

Die vorstehend beschriebene Schneidengeometrie und die verwendeten Begriffe sind nachfolgend anhand von FIG 1 erläutert. FIG 1 stellt ein bekanntes Gewindebohrer 2 zur spanenden Werkstückbearbeitung dar, und zwar einen Querschnitt senkrecht zu einer Längs- bzw. Drehachse A des Gewindebohrers 2. Zu erkennen sind vier am Werkzeugumfang angeordnete Schneidzähne 3, jeweils mit einem in einer vorgesehenen Drehrichtung D vorlaufenden Ende 4 und einem nachlaufenden Ende 5. An einem Schneidzahn 3 sind die vorgenannten Winkel eingetragen, ein Spanwinkel y zwischen einer Spanfläche 6 am vorlaufenden Zahnende 4 und dem Gewindebohrerradius R (Gerade senkrecht zur Gewindebohrerlängsachse A, schneidend die Gewindebohrerlängsachse A und eine Keilkante 9, siehe unten), ein Freiwinkel α zwischen einer auf das nachlaufende Zahnende 5 zulaufenden Freifläche 7 und einer Senkrechten S zum Gewindebohrerradius R (dieser Senkrechten S entspricht eine Tangentialfläche an die von dem Schneidzahn bearbeitete Werkstückoberfläche, entsprechend entspricht der Radius R einem Lot auf die von dem Schneidzahn bearbeitete Werkstückoberfläche) sowie ein Keilwinkel β zwischen Spanfläche 6 und Freifläche 7. Spanfläche 6 und Freifläche 7 schließen einen Keil 8 zwischen sich ein, dessen Keilkante 9 eine Umfangsschneide 9 bzw. Umfangsschneidkante 9 des Zahns 3 bildet.

Die Summe von Spanwinkel γ, Keilwinkel β und Freiwinkel α beträgt immer 90°. Dementsprechend ist der Spanwinkel γ bei einer (in Richtung auf die Umfangsschneide 9 betrachteten) Neigung der Spanfläche 6 gegenüber dem Radius R in Drehrichtung D positiv und bei einer Neigung entgegen der Drehrichtung D negativ.

Bei den bekannten Gewindebohrern besteht insbesondere bei hohen Schnittgeschwindigkeiten die Gefahr von Beschädigungen an der Umfangsschneide und damit eines erhöhten Werkzeugverschleißes, wodurch die Werkzeugstandzeit reduziert wird.

Aus US 6 105 467 ist ein Werkzeug bekannt, bei dem die Schneidkante durch Rundung abgestumpft ist.

Es ist Aufgabe der Erfindung, ein neuen Gewindebohrer zur spanenden Werkstückbearbeitung anzugeben, bei dem die vorgenannten Nachteile zumindest teilweise überwunden oder zumindest verringert sind.

Diese Aufgabe wird mit den Merkmalen des Patentanspruches 1 gelöst. Vorteilhafte Ausgestaltungen und Weiterbildungen ergeben sich aus den von Anspruch 1 abhängigen Ansprüchen.

Gemäß der Erfindung sind am Umfang des Gewindebohrers zur spanenden Werkstückbearbeitung Schneidzähne mit jeweils einem vorlaufenden und einem nachlaufenden Ende angeordnet. Das vorlaufende Ende jedes Zahnes bildet zwischen wenigstens einer Spanfläche mit wenigstens einem Spanwinkel und wenigstens einer Freifläche mit einem wenigstens Freiwinkel wenigstens einen Keil mit wenigstens einer Keilkante und wenigstens einem Keilwinkel. Die oder wenigstens eine Keilkante bildet eine Umfangsschneide (auch: Umfangsschneidkante, Außenschneide) des Gewindebohrers.

Ferner sieht die Erfindung vor, dass der oder wenigstens ein Keilwinkel an und/oder nahe der zugehörigen Keilkante vergrößert ist durch Ausbildung eines Kantenübergangs zwischen Spanfläche und Freifläche. Mit anderen Worten: Die Umfangsschneide ist durch den Kantenübergang entschärft. Spanfläche und Freifläche stoßen nicht direkt an der Kante aufeinander, vielmehr ist zwischen ihnen ein Kantenübergang ausgebildet. Der Kantenübergang kann auch als Übergangsfläche oder als Übergangsbereich bezeichnet werden. Genau genommen ist die Keilkante beim erfindungsgemäßen Gewindebohrer nur noch eine theoretische Keilkante, da sie durch den Kantenübergang ersetzt ist. Anders formuliert ist somit der Keilwinkel im Bereich des Kantenübergangs vergrößert im Vergleich zu den angrenzenden Zahnbereichen.

Aufgrund dieser Ausbildung sind an und/oder nahe der (theoretischen) Keilkante (alternativ kann auch vom Bereich des Kantenübergangs gesprochen werden, dieser ersetzt ja die Keilkante) der Spanwinkel und/oder der Freiwinkel reduziert. Dies ergibt sich direkt daraus, dass die Summe aus Spanwinkel, Keilwinkel und Freiwinkel gleich 90° ist. Gegebenenfalls nehmen Spanwinkel und/oder Freiwinkel negative Werte an.

Gemäß Anspruch 1 sieht die Erfindung weiter vor, dass der oder wenigstens ein Kantenübergang, insbesondere in einem Querschnitt, vorzugsweise im Querschnitt senkrecht zur Längsachse des Gewindebohrers, oder auch in einer anderen Schnittebene, z.B. bei Spiralverlauf oder Schälschnitt oder Stirnschnitt, abschnittsweise eine oder mehrere Krümmungen aufweist.

Weiter sieht die Erfindung vor, dass der vorgenannte Kantenübergang, insbesondere in einem Querschnitt, vorzugsweise im Querschnitt senkrecht zur Längsachse, in einem oder mehreren beliebigen Teilbereichen gerade ausgebildet ist.

Die Vorteile dieser Erfindung liegen insbesondere darin, dass der Werkzeugverschleiß an der Umfangsschneide reduziert und damit die Werkzeugstandzeiten erhöht sind. Die vorgeschlagene neue Schneidengeometrie wirkt sich auch vorteilhaft auf die Spanbildung und auf die Spanabfuhr aus.

Die oder wenigstens eine Keilkante kann am Zahnkopfbereich des zugehörigen Schneidzahns ausgebildet sein. Es ist aber ebenso möglich, dass die oder wenigstens eine Keilkante an wenigstens einer Zahnflanke des zugehörigen Schneidzahns ausgebildet ist.

Für alle Ausführungsformen gilt, dass der Kantenübergang, insbesondere in einem Querschnitt, vorzugsweise im Querschnitt senkrecht zur Längsachse, insgesamt oder zumindest teilweise eine konkave und/oder eine konvexe Krümmung aufweisen kann.

Bevorzugt weist die Krümmung oder zumindest eine der Krümmungen zumindest abschnittsweise einen konstanten Krümmungsradius auf. Alternativ oder additiv kann vorgesehen sein, dass die Krümmung oder zumindest eine der Krümmungen zumindest abschnittsweise einen sich kontinuierlich ändernden Krümmungsradius aufweist.

Eine zweckmäßige Weiterbildung sieht vor, dass der Krümmungsradius der Krümmung oder die Krümmungsradien der Krümmungen zwischen 0 % und 40 % der Zahnhöhe (auch: Profilhöhe) liegen, insbesondere zwischen 0,02 % und 35 % der Zahnhöhe. Die Zahnhöhe oder Profilhöhe ist dabei die Differenz zwischen dem radialen Abstand der Keilkante von der Gewindebohrerlängsachse und dem radialen Abstand des Umfangs des Gewindebohrerkerns, an dem der Zahn ansetzt, von der Gewindebohrerslängsachse. Mit anderen Worten: Die radiale Höhe des Zahns über dem kompakten Gewindebohrerkern. Typische Zahnhöhen liegen im Bereich von 0,4 mm bis 4 mm.

Eine Ausführungsvariante sieht vor, dass der Kantenübergang, insbesondere in einem Querschnitt, vorzugsweise im Querschnitt senkrecht zur Längsachse, insgesamt oder zumindest teilweise ausgehend von der Spanfläche oder der Freifläche eine trompetenförmige Krümmung aufweist. Eine Trompetenform ist eine Form, die einen sich kontinuierlich ändernden Krümmungsradius aufweist, entsprechend der äußeren Form einer Trompete zur Trompetenöffnung hin.

Entsprechend einer Weiterbildung des Gewindebohrers weist der Kantenübergang, insbesondere in einem Querschnitt, vorzugsweise im Querschnitt senkrecht zur Längsachse, angrenzend an die Spanfläche eine erste Krümmung auf. Alternativ oder additiv kann der Kantenübergang, insbesondere in einem Querschnitt, vorzugsweise im Querschnitt senkrecht zur Längsachse, angrenzend an die Freifläche eine zweite Krümmung aufweisen. Sind erste und zweite Krümmung ausgebildet, kann vorgesehen sein, dass die erste Krümmung einen konstanten ersten Krümmungsradius aufweist und die zweite Krümmung einen konstanten zweiten Krümmungsradius, wobei der erste Krümmungsradius dem zweiten Krümmungsradius entspricht oder der erste Krümmungsradius größer als der zweite Krümmungsradius ist oder der erste Krümmungsradius kleiner als der zweite Krümmungsradius ist.

Erste und zweite Krümmung können hierbei direkt ineinander übergehen. Es ist aber ebenso möglich, dass zwischen erster und zweiter Krümmung ein weiterer Abschnitt des Kantenübergangs ausgebildet ist, der beispielsweise im Querschnitt geradlinig verläuft.

Eine Weiterbildung der Erfindung sieht vor, dass der Kantenübergang mindestens zwei gegenüber Spanfläche und Freifläche und zueinander geneigte Ebenen aufweisen.

Die Vorteile dieser Weiterbildung liegen ebenfalls insbesondere darin, dass der Werkzeugverschleiß an der Umfangsschneide reduziert und damit die Werkzeugstandzeiten erhöht sind. Die vorgeschlagene neue Schneidengeometrie wirkt sich ferner vorteilhaft auf die Spanbildung und auf die Spanabfuhr aus.

Bevorzugt weist der Kantenübergang drei gegenüber Spanfläche und Freifläche und zueinander geneigte Ebenen auf.

Gemäß einem Ausführungsbeispiel sind die zueinander geneigten Ebenen des Kantenübergangs, insbesondere in einem Querschnitt, vorzugsweise im Querschnitt senkrecht zur Längsachse, gerade ausgebildet.

Bei allen vorstehenden Ausführungsformen der Erfindung kann vorgesehen sein, dass der Spanwinkel im Bereich des Kantenübergangs reduziert ist. Alternativ oder additiv kann auch der Freiwinkel im Bereich des Kantenübergangs reduziert sein.

Beim Vorsehen der zueinander geneigten Ebenen im Kantenübergang kann bei einer Weiterbildung der Spanwinkel in einer an die Spanfläche angrenzenden ersten Ebene des Kantenübergangs negativ sein. Weiter kann der Spanwinkel in einer an die erste Ebene angrenzenden zweiten Ebene des Kantenübergangs kleiner als in der ersten Ebene sein. Bei vorsehen von weiteren Ebenen, insbesondere bei drei Ebenen, kann ferner der Spanwinkel in einer an die zweite Ebene angrenzenden dritten Ebene des Kantenübergangs kleiner als in der zweiten Ebene sein.

Bei allen Ausführungsformen der Erfindung kann sich der Kantenübergang über 1 % bis 40 % der Zahnhöhe bzw. Profilhöhe erstrecken, insbesondere über 5 % bis 35 % der Zahnhöhe. Zahnhöhe bzw. Profilhöhe wurden bereits vorstehend definiert. Unter Erstreckung des Kantenübergangs ist hier die radiale Erstreckung des Kantenübergangs zu verstehen, das heißt die Differenz zwischen dem maximalen und dem minimalen radialen Abstand des Kantenübergangs von der Gewindebohrerlängsachse.

Die Keilkante(n) mit dem Kantenübergang, entsprechend der Umfangsschneide, kann/können in allen Ausführungsformen an einem Zahnkopf des Schneidzahnes und/oder auch an einer Zahnflanke des Schneidzahnes und/oder an einer Nut oder einem Schälschnitt etc. angeordnet sein. Ferner kann der Keilwinkel oder der Kantenübergang an verschiedenen Keilkanten eines Zahnes oder mehrerer Zähne und/oder entlang wenigstens einer Keilkante variieren und/oder bei verschiedenen Zähnen bei entsprechenden Keilkanten variieren, insbesondere in einem Anschnitt- oder Anlaufbereich anders ist als in einem Vollprofilbereich etc.

In einer weiteren Variante der Erfindung mit wenigstens einer Keilkante an einer Zahnflanke eines Schneidzahnes ist der oder wenigstens ein Keilwinkel an und/oder nahe einer oder der an einer Zahnflanke des zugehörigen Schneidzahnes ausgebildeten Keilkante vergrößert durch Ausbildung eines Kantenübergangs zwischen Spanfläche und Freifläche.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils in schematischer Darstellung
- FIG 1: ein bekanntes Gewindebohrer nach dem Stand der Technik zur spanenden Werkstückbearbeitung in einem Querschnitt senkrecht zur Gewindebohrerlängsachse, und
- FIG 2 bis FIG 13: verschiedene Ausführungsbeispiele einer Schneidengeometrie eines Gewindebohrers, wobei jeweils ein Schneidzahn im Querschnitt senkrecht zur Gewindebohrerlängsachse dargestellt ist. FIG 6, 7, 8 und 9 zeigen Gewindebohrer nach der Erfindung, bei den in FIG 2 bis 5 und FIG 10 bis 13 gezeigten Gewindebohrern handelt es sich um keine Gewindebohrer nach der Erfindung.

Einander entsprechende Teile, Flächen bzw. Abschnitte sind in FIG 1 bis FIG 13 mit den gleichen Bezugszeichen versehen.

FIG 1 wurde bereits vorstehenden bei der Beschreibung des Stands der Technik erläutert. FIG 1 zeigt ein bekanntes Gewindebohrer gemäß dem Stand der Technik und verdeutlicht die verwendeten Fachbegriffe.

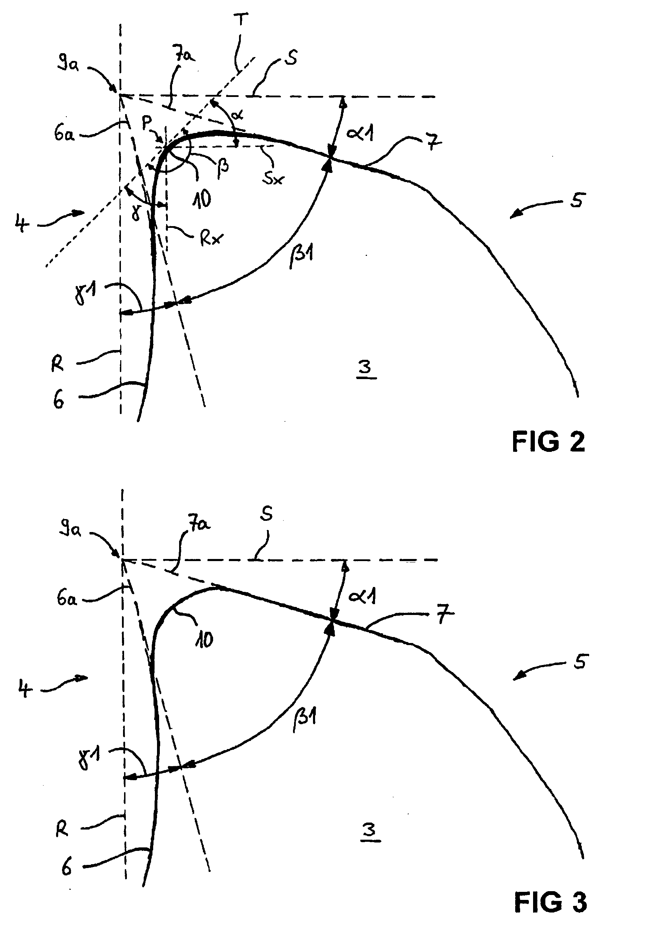

FIG 2 bis FIG 13 zeigen schematisch verschiedene Ausführungsbeispiele einer Schneidengeometrie eines Gewindebohrers. Dargestellt ist jeweils ein Schneidzahn 3 im Querschnitt senkrecht zur Gewindebohrerlängsachse.

Zu erkennen ist an einem in einer vorgesehenen Drehrichtung vorlaufenden Zahnende 4 eine Spanfläche 6 und an einem nachlaufenden Zahnende 5 eine Freifläche 7. Diese grenzen im Unterschied zum Stand der Technik (vgl. FIG 1) nicht mehr direkt aneinander, vielmehr ist zwischen ihnen ein Kantenübergang 10 ausgebildet. Um den Unterschied zum Stand der Technik zu verdeutlichen, ist in FIG 2 bis FIG 13 der eigentlich nach dem Stand der Technik vorgesehene Verlauf von Spanfläche 6a und Freifläche 7a durch gestrichelte Linien dargestellt (vergleiche hierzu FIG 1). Spanfläche 6a und Freifläche 7a nach dem Stand der Technik laufen nach dem Stand der Technik in einer Keilkante 9a zusammen, die in FIG 2 bis FIG 13 ebenfalls dargestellt ist. Eingetragen sind ferner der Gewindebohrerradius R und die Senkrechte S sowie Spanwinkel γ1, Freiwinkel α1 und Keilwinkel β1 nach dem Stand der Technik. Diese Winkel sind auch bei der Schneidengeometrie eines erfindungsgemäßen Gewindebohrers verwirklicht, jedoch nur in einem Bereich, in dem die Zahnform der aus dem Stand der Technik bekannten Form entspricht, das heißt in einem vom der (theoretischen) Keilkante 9a beabstandeten Bereich. Zur Keilkante 9a hin unterscheidet sich die Zahnform von der bekannten Zahnform, die Schneidengeometrie ist geändert. Die Keilkante 9a ist ersetzt durch einen Kantenübergang 10, der in FIG 2 bis FIG 13 eine unterschiedliche Querschnittsform aufweist.

Der Keilwinkel β ist im Bereich des Kantenübergangs 10 gegenüber dem Keilwinkel β1 nach dem Stand der Technik, der für die Spanfläche 6 außerhalb des Kantenübergangs 10 weiterhin zutrifft, vergrößert. Der Spanwinkel γ ist im Bereich des Kantenübergangs 10 gegenüber dem Spanwinkel γ1 nach dem Stand der Technik, der ebenfalls für die Freifläche 7 außerhalb des Kantenübergangs 10 weiterhin zutrifft, verkleinert. Dies ist in FIG 2 beispielhaft für einen Punkt P des Kantenübergangs 10 dargestellt und gilt entsprechend für die Ausführungsformen nach FIG 3 bis FIG 13. In FIG 2 ist der Kantenübergang 10 zwischen Spanfläche 6 und Freifläche 7 vollständig gekrümmt ausgebildet, das heißt die Krümmung erstreckt sich von der Spanfläche 6 durchgängig bis zur Freifläche 7, wobei der Krümmungsradius sich hierbei verändert. An dem Punkt P des Kantenübergangs 10 ist eine Tangente T eingetragen, die eine (theoretische) Spanfläche und Freifläche an diesem Punkt definiert und damit den Spanwinkel γ und den Freiwinkel α sowie den Keilwinkel β für diesen Punkt P definiert. Hierzu sind ergänzend für diesen Punkt der Radius Rx und die dazugehörige Senkrechte Sx eingetragen. Der (theoretische) Keilwinkel β in FIG 2 ist ein 180°-Winkel und ist damit gegenüber dem deutlich kleineren Keilwinkel β1 nach dem Stand der Technik vergrößert. Der Spanwinkel γ und der Freiwinkel α sind nunmehr negativ und damit gegenüber dem Spanwinkel γ1 bzw. dem Freiwinkel α1 beim Stand der Technik verkleinert.

Zur Erläuterung sei angemerkt, dass der Kantenübergang 10 sich nur über einen kleinen Abschnitt der Zahnhöhe erstrecken soll, insbesondere nur etwa über 1 % bis 40 % der Zahnhöhe. Demzufolge können die vorstehend als Spanwinkel γ1, Freiwinkel α1 und Keilwinkel β1 "nach dem Stand der Technik" bezeichneten Winkel durchaus auch bei einem Gewindebohrer nach der Erfindung als der tatsächliche Spanwinkel, Freiwinkel und Keilwinkel angesehen werden. Die Werte dieser Winkel sind nur direkt an der Zahnspitze, das heißt an der Keilkante, geändert, da diese durch die Ausbildung des Keilübergangs nicht mehr in der aus dem Stand der Technik bekannten Form vorhanden ist.

Wie in FIG 2 ist der Kantenübergang 10 auch in FIG 3 vollständig gekrümmt, wobei sich die Krümmung im Verlauf des Kantenübergangs 10 kontinuierlich ändert und auch der Übergang zu Spanfläche 6 und Spanfläche 7 kontinuierlich, das heißt ohne Knickstelle, ausgebildet ist. Alternativ ist selbstverständlich auch vorstellbar, die Krümmung über den gesamten Kantenübergang 10 mit einheitlichem Krümmungsradius auszubilden und gegebenenfalls am Übergang zu Spanfläche 6 und Freifläche 7 einen Knick, das einen nicht kontinuierlichen Flächenverlauf, vorzusehen.

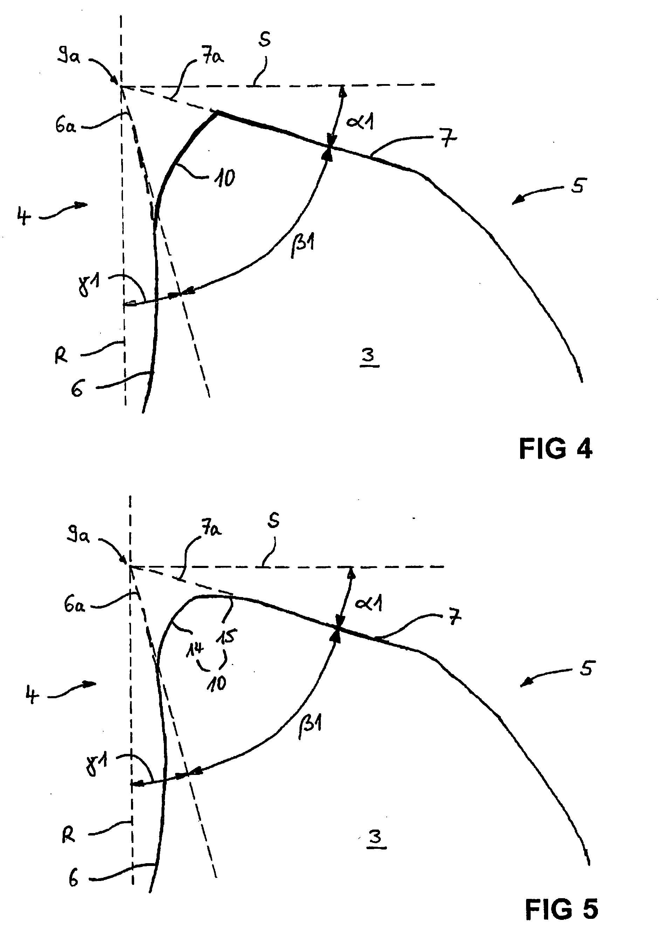

In FIG 4 ist der Kantenübergang 10 durchgehend gekrümmt, die Krümmung weist die Form einer Trompetenkurve auf, das heißt der Krümmungsradius verändert sich kontinuierlich, insbesondere nimmt er im dargestellten Fall ausgehend von der Freifläche 7 kontinuierlich zu. An der Freifläche 7 ist der Übergang zum Kantenübergang als Knick oder Kante ausgebildet. Symbolisch gesprochen liegt die Trompetenöffnung der dargestellten Trompetenkurve auf Seiten der Spanfläche 6. Selbstverständlich ist auch eine umgekehrte Ausbildung denkbar, das heißt ein kontinuierlicher Anstieg der Krümmung des Kantenübergangs ausgehend von der Spanflächen-Seite.

FIG 5 zeigt eine Schneidengeometrie, bei der der Kantenübergang 10 eine erste Krümmung 14 und eine zweite Krümmung 15 aufweist, die in einem Knick bzw. einer Kante ineinander übergehen. Die Krümmungsradien der jeweiligen Krümmungen können dabei beliebig sein. Sie können sich innerhalb der ersten Krümmung 14 bzw. der zweiten Krümmung 15 verändern oder auch innerhalb der jeweiligen Krümmung 14, 15 konstant sein. Sie können hierbei in beiden Krümmungen 14, 15 den gleichen Wert aufweisen oder sich unterscheiden.

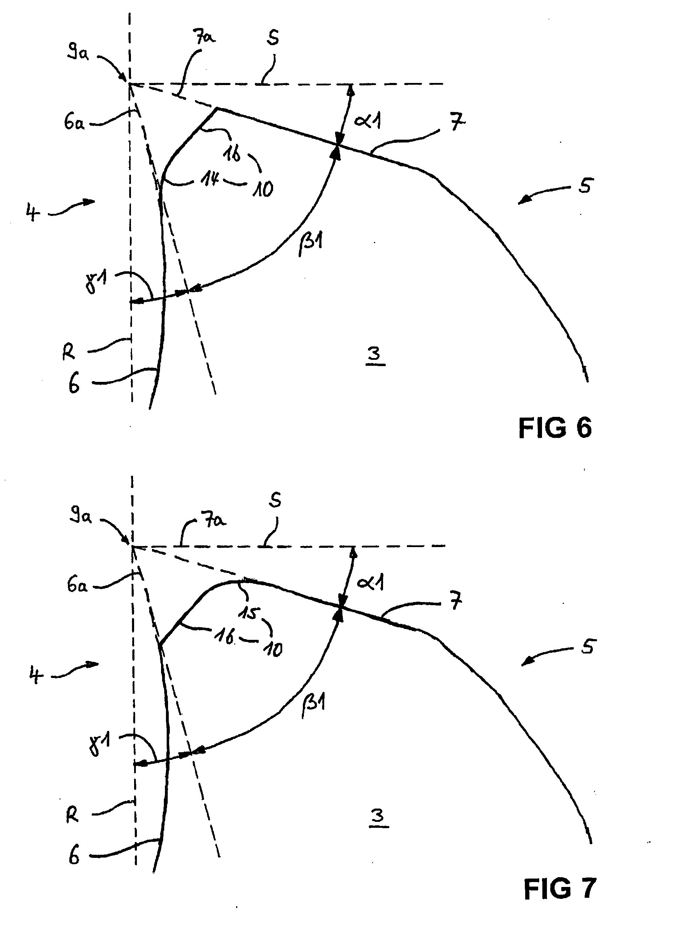

In FIG 6 und FIG 7 weist der Kantenübergang 10 jeweils einen im Querschnitt geradlinigen Teilbereich 16 auf sowie angrenzend an die Spanfläche 6 eine erste Krümmung 14 (FIG 6) bzw. angrenzend an die Freifläche 7 eine zweite Krümmung 15 (FIG 7).

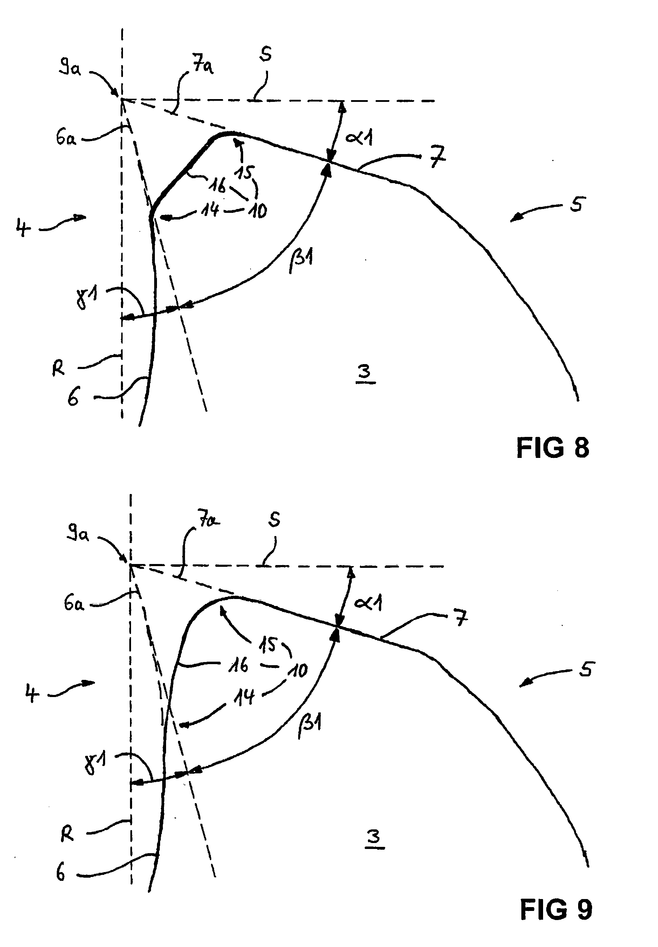

FIG 8 und FIG 9 zeigen Ausführungsbeispiele, bei denen der Kantenübergang 10 angrenzend an die Spanfläche 6 eine erste Krümmung 14 aufweist, gefolgt von einem geraden Teilbereich 16, der schließlich zur Freifläche 7 hin in eine zweite Krümmung 15 übergeht. In FIG 8 ist der gerade Teilbereich 16 um etwa 45° gegenüber dem Radius R geneigt, wohingegen die Neigung zum Radius R in FIG 9 deutlich geringer ausfällt. Die Krümmungsradien der ersten Krümmung 14 und der zweiten Krümmung 15 sind entsprechend angepasst. Insbesondere der Krümmungsradius der ersten Krümmung 14 ist in FIG 9 deutlich größer als in FIG 8.

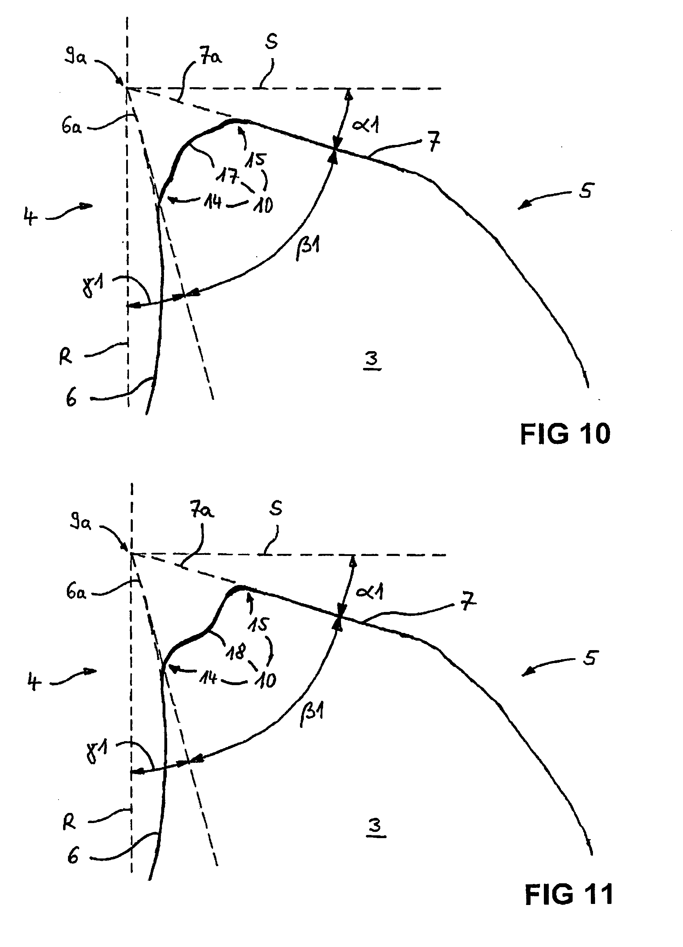

FIG 10 zeigt eine Variante, bei der der Kantenübergang 10 in einem Teilbereich eine konvexe Krümmung 17 aufweist. FIG 11 zeigt eine Variante mit einer konkaven Krümmung 18 in einem Teilbereich des Kantenübergangs 10. In beiden Fällen ergänzen eine an die Spanfläche 6 angrenzende erste Krümmung 14 sowie eine an die Freifläche 7 angrenzende zweite Krümmung 15 den Kantenübergang 10. Selbstverständlich könnte der Kantenübergang 10 auch durchgehend konvex oder konkav gekrümmt ausgebildet sein, gegebenenfalls unter Ausbildung eines entsprechenden Knicks bzw. einer entsprechenden Kante am Übergang zu Spanfläche 6 und/oder Freifläche 7.

FIG 11 zeigt eine Variante, bei der der Kantenübergang 10 aus einer ersten Ebene 11 und einer zweiten Ebene 12 gebildet ist, die zueinander und gegenüber der Spanfläche 6 und der Freifläche 7 geneigt sind, das heißt einen unterschiedlichen Winkel zum Radius R aufweisen. Dementsprechend ist zwischen erster Ebene 11 und zweiter Ebene 12 ein Knick 19 bzw. eine Kante 19 ausgebildet. Auch am Übergang zu Spanfläche 6 und Freifläche 7 ist jeweils ein Knick 20, 21 (auch: Kante) ausgebildet. Die zweite Ebene 12 ist stärker gegenüber dem Radius R geneigt als die erste Ebene 11.

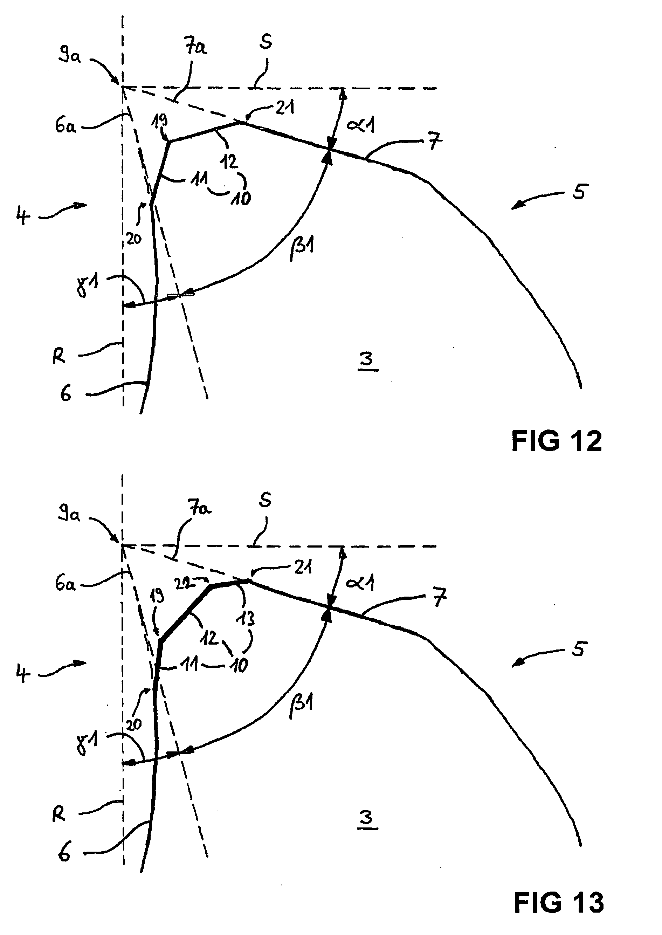

FIG 12 zeigt eine Ausführungsform, bei der der Kantenübergang 10 eine erste Ebene 11 angrenzend an die Spanfläche 6, daran anschließend eine zweite Ebene 12 und angrenzend an die Freifläche 7 eine dritte Ebene 13 aufweist. Die drei Ebenen 11, 12, 13 sind wiederum gegeneinander und gegenüber Spanfläche 6 und Freifläche 7 geneigt, was zur Ausbildung der Knickstellen bzw. Kanten 19, 20, 21, 22 führt.

Insgesamt gibt die Erfindung somit eine neue Schneidengeometrie an, bei der zwischen Spanfläche und Freifläche ein Kantenübergang ausgebildet ist. Dadurch sind im Bereich des Kantenübergangs der Keilwinkel vergrößert und der Spanwinkel und/oder der Freiwinkel reduziert. Dadurch reduziert sich der Verschleiß an der Zahnspitze, die Werkzeugstandzeit wird verlängert.

Die konkrete Ausbildung des Kantenübergangs erfolgt jeweils angepasst an die vorgesehene Werkzeugverwendung.

Die Herstellung des Kantenübergangs kann beispielsweise durch entsprechendes Feilen oder Schleifen des Werkzeugs erfolgen.

### Bezugszeichenliste

- 2: Gewindebohrer
- 3: Schneidzahn
- 4: vorlaufendes Zahnende
- 5: nachlaufendes Zahnende
- 6: Spanfläche
- 6a: Spanflächenverlauf nach Stand der Technik
- 7: Freifläche
- 7a: Freiflächenverlauf nach Stand der Technik
- 8: Keil
- 9: Keilkante, Umfangsschneide (auch: Umfangsschneidkante)
- 9a: Keilkante bzw. Umfangsschneide nach Stand der Technik
- 10: Kantenübergang
- 11: erste Ebene
- 12: zweite Ebene
- 13: dritte Ebene
- 14: erste Krümmung
- 15: zweite Krümmung
- 16: gerader Teilbereich
- 17: konvexe Krümmung
- 18: konkave Krümmung
- 19: Knick, Kante
- 20: Knick, Kante
- 21: Knick, Kante
- 22: Knick, Kante

- α: Freiwinkel
- β: Keilwinkel
- γ: Spanwinkel
- α1: Freiwinkel nach dem Stand der Technik
- β1: Keilwinkel nach dem Stand der Technik
- γ1: Spanwinkel nach dem Stand der Technik
- A: Gewindebohrerlängsachse, Drehachse
- D: Drehrichtung
- P: Punkt
- R: Gewindebohrerradius
- Rx: Radius am Punkt P
- S: Senkrechte
- Sx: Senkrechte am Punkt P
- T: Tangente

## Patentansprüche

1. Gewindebohrer,
a) an dessen Umfang Schneidzähne (3) mit jeweils einem vorlaufenden Ende (4) und einem nachlaufenden Ende (5) angeordnet sind,
b) wobei das vorlaufende Ende (4) jedes Zahnes (3) zwischen wenigstens einer Spanfläche (6, 6a) mit wenigstens einem Spanwinkel (γ, γ1) und wenigstens einer Freifläche (7, 7a) mit wenigstens einem Freiwinkel (α, α1) wenigstens einen Keil (8) mit wenigstens einer Keilkante (9, 9a) und wenigstens einem Keilwinkel (β, β1) bildet,
c) wobei die oder wenigstens eine Keilkante (9, 9a) eine Umfangsschneide des Gewindebohrers (2) bildet, und
d) wobei der oder wenigstens ein Keilwinkel (β) an und/oder nahe der zugehörigen Keilkante (9, 9a) vergrößert ist durch Ausbildung eines Kantenübergangs (10) zwischen Spanfläche (6) und Freifläche (7), **dadurch gekennzeichnet, dass**
e) der oder wenigstens ein Kantenübergang (10) abschnittsweise eine oder mehrere Krümmungen aufweist,
f) und dass der Kantenübergang, der abschnittsweise eine oder mehrere Krümmungen aufweist, in zumindest einem Teilbereich (16) gerade ausgebildet ist.

2. Gewindebohrer nach Anspruch 1,
**dadurch gekennzeichnet,**
**dass** der Kantenübergang (10), insbesondere in einem Querschnitt, vorzugsweise im Ouerschnitt senkrecht zur Längsachse (A) des Gewindebohrers (2), angrenzend an Spanfläche (6) und Freifläche (7) eine Krümmung (14, 15) aufweist und zwischen den Krümmungen (14, 15) geradlinig (16) ausgebildet ist.

3. Gewindebohrer nach Anspruch 1 oder 2,
**dadurch gekennzeichnet, dass**
die oder wenigstens eine Keilkante am Zahnkopfbereich und/oder an wenigstens einer Zahnflanke des zugehörigen Schneidzahns ausgebildet ist.

4. Gewindebohrer nach einem der vorhergehenden Ansprüche,
**dadurch gekennzeichnet, dass**
der Kantenübergangs (10), insbesondere in einem Querschnitt, vorzugsweise im Querschnitt senkrecht zur Längsachse (A) des Gewindebohrers (2), insgesamt oder zumindest teilweise eine konkave und/oder konvexe Krümmung (18) aufweist.

5. Gewindebohrer nach einem der vorhergehenden Ansprüche,
**dadurch gekennzeichnet,**
**dass** die Krümmung oder zumindest eine der Krümmungen zumindest abschnittsweise einen konstanten Krümmungsradius aufweist, und/oder
**dass** die Krümmung oder zumindest eine der Krümmungen zumindest abschnittsweise einen sich kontinuierlich ändernden Krümmungsradius aufweist, und/oder
**dass** der Krümmungsradius der Krümmung oder die Krümmungsradien der Krümmungen zwischen 0 % und 40 % der Zahnhöhe liegen, insbesondere zwischen 0,02 % und 35 % der Zahnhöhe, und/oder
**dass** der Querschnitt des Kantenübergangs (10) insgesamt oder zumindest teilweise ausgehend von der Spanfläche (6) oder der Freifläche (7) eine trompetenförmige Krümmung aufweist.

6. Gewindebohrer nach einem der vorhergehenden Ansprüche,
**dadurch gekennzeichnet, dass**
der Kantenübergangs (10), insbesondere in einem Querschnitt vorzugsweise im Querschnitt senkrecht zur Längsachse (A) des Gewindebohrers (2), angrenzend an die Spanfläche (6) eine erste Krümmung (14) und/oder eine zweite Krümmung (15) aufweist.

7. Gewindebohrer nach Anspruch 6,
**dadurch gekennzeichnet, dass**
die erste Krümmung (14) einen konstanten ersten Krümmungsradius aufweist und die zweite Krümmung (15) einen konstanten zweiten Krümmungsradius, wobei der erste Krümmungsradius dem zweiten Krümmungsradius entspricht oder der erste Krümmungsradius größer als der zweite Krümmungsradius ist oder der erste Krümmungsradius kleiner als der zweite Krümmungsradius ist.

8. Gewindebohrer (2) nach einem der vorhergehenden Ansprüche,
**dadurch gekennzeichnet, dass**
der Kantenübergang (10) mindestens zwei gegenüber Spanfläche (6) und Freifläche (7) und zueinander geneigte Ebenen (11, 12, 13) aufweist.

9. Gewindebohrer nach Anspruch 8,
**dadurch gekennzeichnet,**
**dass** der Kantenübergang (10) drei gegenüber Spanfläche (6) und Freifläche (7) und zueinander geneigte Ebenen (11, 12, 13) aufweist, und/oder
**dass** die zueinander geneigten Ebenen (11, 12, 13) des Kantenübergangs (10) im Querschnitt senkrecht zur Längsachse des Gewindebohrers (2) gerade ausgebildet sind.

10. Gewindebohrer nach einem der vorhergehenden Ansprüche,
**dadurch gekennzeichnet, dass**
der Spanwinkel (γ) und/oder der Freiwinkel (α) im Bereich des Kantenübergangs (10) reduziert ist.

11. Gewindebohrer nach einem der vorhergehenden Ansprüche,
**dadurch gekennzeichnet, dass** der Spanwinkel (γ) in einer an die Spanfläche (6) angrenzenden ersten Ebene (11) des Kantenübergangs (10) negativ ist.

12. Gewindebohrer nach Anspruch 11,
**dadurch gekennzeichnet, dass**
der Spanwinkel (γ) in einer an die erste Ebene (11) angrenzenden zweiten Ebene (12) des Kantenübergangs (10) kleiner als in der ersten Ebene (11) ist.

13. Gewindebohrer nach Anspruch 12,
**dadurch gekennzeichnet, dass**
der Spanwinkel (γ) in einer an die zweite Ebene (12) angrenzenden dritten Ebene (13) des Kantenübergangs (10) kleiner als in der zweiten Ebene (12) ist.

14. Gewindebohrer nach einem der vorhergehenden Ansprüche,
**dadurch gekennzeichnet, dass**
sich der Kantenübergang (10) über 1 % bis 40 % der Zahnhöhe erstreckt, insbesondere über 5 % bis 35 % der Zahnhöhe.

15. Gewindebohrer nach einem der vorhergehenden Ansprüche, bei dem der Keilwinkel oder der Kantenübergang an verschiedenen Keilkanten eines Zahnes oder mehrerer Zähne und/oder entlang wenigstens einer Keilkante variiert und/oder bei verschiedenen Zähnen bei entsprechenden Keilkanten variiert, insbesondere in einem Anschnitt- oder Anlaufbereich anders ist als in einem Vollprofilbereich.

## Claims

1. Thread tapping tool,
a) at the circumference of which cutting teeth (3) each having a leading end (4) and a trailing end (5) are arranged,
b) wherein the leading end (4) of each tooth (3) forms, between at least one tool face (6, 6a) with at least one rake angle (γ, γ1) and at least one tool flank (7, 7a) with at least one clearance angle (α, α1), at least one wedge (8) with at least one wedge edge (9, 9a) and at least one wedge angle (β, β1),
c) wherein the or at least one wedge edge (9, 9a) forms a circumferential edge of the thread tapping tool (2), and
d) wherein the or at least one wedge angle (β) at and/or close to the associated wedge edge (9, 9a) is enlarged by forming an edge transition (10) between the tool face (6) and the tool flank (7),
**characterised in that**
e) the or at least one edge transition (10) has one or more curvatures in sections,
f) and **in that** the edge transition which has one or more curvatures in sections, is configured straight in at least one partial region (16).

2. Thread tapping tool according to claim 1,
**characterised in that**
the edge transition (10) has a curvature (14, 15), particularly in a cross-section, preferably in the cross-section perpendicular to the longitudinal axis (A) of the thread tapping tool (2) adjoining the tool face (6), and the tool flank (7) and between the curvatures (14, 15) is configured straight (16).

3. Thread tapping tool according to claim 1 or 2,
**characterised in that**
the or at least one wedge edge is provided at the tooth tip region and/or at at least one tooth flank of the associated cutting tooth.

4. Thread tapping tool according to one of the preceding claims,
**characterised in that**
the edge transition (10), particularly in a cross-section, preferably in the cross-section perpendicular to the longitudinal axis (A) of the thread tapping tool (2) has, overall or at least partially, a concave and/or convex curvature (18).

5. Thread tapping tool according to one of the preceding claims,
**characterised in that**
the curvature or at least one of the curvatures has a constant radius of curvature at least in sections, and/or
**in that** the curvature or at least one of the curvatures has a radius of curvature which changes continuously at least in sections, and/or
**in that** the radius of curvature of the curvature or the radii of curvature of the curvatures lie between 0% and 40% of the tooth height, in particular between 0.02% and 35% of the tooth height,
and/or
**in that** the cross-section of the edge transition (10) has a trumpet-shaped curvature, overall or at least partially, starting from the tool face (6) or the tool flank (7).

6. Thread tapping tool according to one of the preceding claims,
**characterised in that**
the edge transition (10), particularly in a cross-section, preferably in the cross-section perpendicular to the longitudinal axis (A) of the thread tapping tool (2) adjoining the tool face (6) has a first curvature (14) and/or a second curvature (15).

7. Thread tapping tool according to claim 6,
**characterised in that** the first curvature (14) has a constant first radius of curvature and the second curvature (15) has a constant second radius of curvature, wherein the first radius of curvature corresponds to the second radius of curvature or the first radius of
curvature is larger than the second radius of curvature or the first radius of curvature is smaller than the second radius of curvature.

8. Thread tapping tool (2) according to one of the preceding claims,
**characterised in that**
the edge transition (10) has at least two planes (11, 12, 13) which are inclined relative to the tool face (6) and the tool flank (7) and relative to one another.

9. Thread tapping tool according to claim 8,
**characterised in that**
the edge transition (10) has three planes (11, 12, 13) which are inclined relative to the tool face (6) and the tool flank (7) and relative to one another, and/or in that the planes (11, 12, 13) of the edge transition (10) which are inclined relative to one another are configured straight in the cross-section perpendicular to the longitudinal axis of the thread tapping tool (2).

10. Thread tapping tool according to one of the preceding claims,
**characterised in that**
the rake angle (γ) and/or the clearance angle (α) is reduced in the region of the edge transition (10).

11. Thread tapping tool according to one of the preceding claims,
**characterised in that**
the rake angle (γ) in a first plane (11) of the edge transition (10) adjoining the tool face (6) is negative.

12. Thread tapping tool according to claim 11,
**characterised in that**
the rake angle (γ) in a second plane (12) adjoining the first plane (11) of the edge transition (10) is smaller than in the first plane (11).

13. Thread tapping tool according to claim 12,
**characterised in that**
the rake angle (γ) is smaller in a third plane (13) adjoining the second plane (12) of the edge transition (10) than in the second plane (12).

14. Thread tapping tool according to one of the preceding claims,
**characterised in that**
the edge transition (10) extends over 1% to 40% of the tooth height, particularly over 5% to 35% of the tooth height.

15. Thread tapping tool according to one of the preceding claims, wherein the wedge angle or the edge transition varies at different wedge edges of a tooth or of a plurality of teeth and/or along at least one wedge edge and/or varies for different teeth at corresponding wedge edges, in particular, is different in a chamfer or taper region than in a full profile region.

## Revendications

1. Taraud
a) sur la circonférence duquel se trouvent des dents de coupe (3) comportant chacune une extrémité de tête (4) et une extrémité de traîne (5),
b) l'extrémité de tête (4) de chaque dent (3) formant, entre au moins une surface d'attaque (6, 6a), avec au moins un angle d'attaque (γ, γ1) et au moins une surface libre (7, 7a), avec au moins un angle libre (α, α1), une cale (8), avec au moins une arête de cale (9, 9a) et au moins un angle de cale (β, β1),
c) la ou au moins une arête de cale (9, 9a) forme un tranchant circonférentiel du taraud (2), et
d) la ou au moins un angle de cale (β) sur et/ou à proximité de l'arête de cale (9, 9a) correspondante étant agrandi par la formation d'une transition d'arête (10) entre la surface d'attaque (6) et la surface libre (7),
**caractérisé en ce que**
e) la ou au moins une transition d'arête (10) présente, sur une portion, une ou plusieurs courbures,
f) et **en ce que** la transition d'arête qui présente, sur une portion, une ou plusieurs courbures, est droite dans au moins une zone partielle (16).

2. Taraud selon la revendication 1, **caractérisé en ce que** la transition d'arête (10), plus particulièrement dans une section transversale, de préférence dans la section transversale perpendiculaire à l'axe longitudinal (A) du taraud (2), présente, près de la surface d'attaque (6) et de la surface libre (7), une courbure (14, 15) et est droite (16) entre les courbures (14, 15).

3. Taraud selon la revendication 1 ou 2, **caractérisé en ce que** la ou au moins une arête de cale est formée sur la zone de tête de la dent et/ou sur au moins un flanc de dent de la dent de coupe correspondante.

4. Taraud selon l'une des revendications précédentes, **caractérisé en ce que** la transition d'arête (10), plus particulièrement dans une section transversale, de préférence dans la section transversale perpendiculaire à l'axe longitudinal (A) du taraud (2), présente globalement ou au moins partiellement une courbure (18) concave et/ou convexe.

5. Taraud selon l'une des revendications précédentes, **caractérisé en ce que** la courbure ou au moins une des courbures présente, au moins sur une portion, un rayon de courbure constant, et/ou
**en ce que** la courbure ou au moins une des courbures présente, au moins sur une portion, un rayon de courbure variant continuellement, et/ou
**en ce que** le rayon de courbure de la courbure ou les rayons de courbure des courbures représentent entre 0% et 40% de la hauteur de la dent, plus particulièrement entre 0,02% et 35% de la hauteur de la dent, et/ou
**en ce que** la section transversale de la transition d'arête (10) présente globalement ou au moins partiellement, à partir de la surface d'attaque (6) ou de la surface libre (7), une courbure en forme de trompette.

6. Taraud selon l'une des revendications précédentes, **caractérisé en ce que**
la transition d'arête (10), plus particulièrement dans une section transversale, de préférence dans la section transversale perpendiculaire à l'axe longitudinal (A) du taraud (2), présente, près de la surface d'attaque (6), une première courbure (14) et/ou une deuxième courbure (15).

7. Taraud selon la revendication 6, **caractérisé en ce que**
la première courbure (14) présente un premier rayon de courbure constant et la deuxième courbure (15) présente un deuxième rayon de courbure constant, le premier rayon de courbure correspondant au deuxième rayon de courbure ou le premier rayon de courbure étant supérieur au deuxième rayon de courbure ou le premier rayon de courbure étant inférieur au deuxième rayon de courbure.

8. Taraud (2) selon l'une des revendications précédentes, **caractérisé en ce que**
la transition d'arête (10) présente au moins deux plans (11, 12, 13) inclinés par rapport à la surface d'attaque (6) et à la surface libre (7) et entre eux.

9. Taraud selon la revendication 8, **caractérisé en ce que**
la transition d'arête (10) présente trois plans (11, 12, 13) inclinés par rapport à la surface d'attaque (6) et à la surface libre (7) et entre eux, et/ou
**en ce que** les plans (11, 12, 13) inclinés entre eux de la transition d'arête (10) sont droits dans la section transversale perpendiculaire à l'axe longitudinal du taraud (2).

10. Taraud selon l'une des revendications précédentes, **caractérisé en ce que**
l'angle d'attaque (γ) et/ou l'angle libre (α) est réduit au niveau de la transition d'arête (10).

11. Taraud selon l'une des revendications précédentes, **caractérisé en ce que**
l'angle d'attaque (γ) est négatif dans un premier plan (11) de la transition d'arête (10) proche de la surface d'attaque (6).

12. Taraud selon la revendication 11, **caractérisé en ce que**
l'angle d'attaque (γ) est, dans un deuxième plan (12) de la transition d'arête (10), adjacent au premier plan (11), plus petit que dans le premier plan (11).

13. Taraud selon la revendication 12, **caractérisé en ce que**
l'angle d'attaque (γ) est, dans un troisième plan (13) de la transition d'arête (10), adjacent au deuxième plan (12), plus petit que dans le deuxième plan (12).

14. Taraud selon l'une des revendications précédentes, **caractérisé en ce que**
la transition d'arête (10) s'étend sur 1% à 40% de la hauteur de dent, plus particulièrement sur 5% à 35% de la hauteur de dent.

15. Taraud selon l'une des revendications précédentes, dans lequel l'angle de cale ou la transition d'arête varie sur différentes arêtes de cale d'une dent ou de plusieurs dents et/ou le long d'au moins une arête de cale et/ou pour différentes dents avec des arêtes de cales correspondantes, plus particulièrement dans une zone d'amorce de coupe ou de démarrage, est autre que dans une zone de profilé plein.
